# EUROPEAN PATENT SPECIFICATION

(11) **EP 4 140 906 B1**
(45) Date of publication and mention of the grant of the patent: **14.02.2024**
(21) Application number: 22190914.6
(22) Date of filing: 18.08.2022
(51) Int. Cl.: B65D 5/24, B65D 5/50, B65D 85/50, B65D 5/12, A23L 17/50, B65D 30/06, B65D 77/02, B65D 81/26, B65D 77/06

(54) **CONTAINER FOR HOLDING A NET BAG FILLED WITH SHELLFISH AND/OR CRUSTACEAN**
BEHÄLTER ZUR AUFNAHME EINES MIT SCHALEN- UND/ODER KRUSTENTIEREN GEFÜLLTEN NETZBEUTELS
RÉCIPIENT DESTINÉ À CONTENIR UN SAC EN FILET REMPLI DE COQUILLAGES ET/OU DE CRUSTACÉS

(30) Priority: 27.08.2021 NL 2029076
(43) Date of publication of application: 01.03.2023
(73) Proprietor: Cortech Protect B.V., 4401 AR Yerseke (NL)
(72) Inventor: Cornelisse, Marinus Adriaan Esdra, 4401 AR Yerseke (NL)
(74) Representative: Arnold & Siedsma

(56) References cited:
- EP-A1- 0 940 345
- EP-A1- 1 524 200
- WO-A1-87/04407
- KR-B1- 101 933 922
- US-B1- 7 870 995

## Description

The present invention is related to a container for holding a net bag filled with shellfish and/or crustacean. The present invention further relates to a cardboard blank for forming such a container. In addition, the present invention relates to a container assembly comprising a container body and a container lid for forming such a container. Furthermore, the present invention relates to container lid that is suitable to be attached to a container body for forming such a container. The present invention also relates to an assembly comprising a container of the type above in which a net bag filled with shellfish and/or crustacean is held.

Shellfish and/or crustacean can be sold in a frozen condition, in which they are packaged in vacuumized bags or boxes, optionally using substitute gasses to replace the ambient air. Alternatively, shellfish and/or crustacean can be sold in a cooled, non-frozen, condition, in which they are arranged on a bed of ice similar to other fish products. In this latter case, the shellfish and/or crustacean are typically packaged in a net bag.

EP1524200A1 discloses a structure having a shape of mesh adapted for holding sea products, e.g., shrimps, which are individualized from bulk of products. A sealable opening permits filling of the products. An identification unit comprises information about origin of capture of the products to permit their traceability. The identification unit is associated with a sealing unit which is adapted to seal the opening.

WO87/04407A1 discloses a packaging comprising two lateral and mutually facing sides, which are designed as prism-shaped hollow bodies. The latter have an inner wall, an outer wall and a top surface. The positioning elements to fix the objects are cut out from the inner wall of the hollow body and when the packing is set up they remain in the plane of the top surface. When the packings are used for two rows of objects, a fold-out support piece is arranged on an inner wall.

EP0940345A1 discloses a carton comprising an open topped tray closeable by a lid located within the tray, the tray having a series of flaps, each having a pair of prongs directed towards the base of the tray, hinged at their upper ends to the tray sides and the lid having a series of apertures corresponding in their spacing to the flaps so that when the lid is lifted the prongs engage the apertures and are hinged upwardly to project into the tray to provide product dividers.

In the non-frozen condition, water or other liquids may emerge from the shellfish and/or crustacean. This complicates storage and transport of the shellfish and/or crustacean, both for the vendor and customer.

An object of the present invention is to provide a container for holding a net bag filled with shellfish and/or crustacean in which the abovementioned problems do not occur or at least to a lesser extent.

According to the present invention, this object is achieved with a container as defined in claim 1 that comprises a bottom wall and one or more of side walls extending upward from the bottom wall and defining a liquid tight inner space in which the net bag can be at least partially arranged, the container further comprising at least one toothed engaging member, each toothed engaging member extending from a respective side wall to which it is connected and being configured for engaging the net bag.

The at least one toothed engaging member engages the net bag, thereby providing a fixation of the net bag relative to the container. Any water or other liquid released from the shellfish and/or crustacean can be collected in the liquid tight inner space of the container. For example, the at least one toothed engaging member can be configured for engaging the net bag when arranging the net bag inside the container, and for maintaining said engagement when a user grabs and displaces the net bag. In this example, a supplier of the shellfish and/or crustacean can arrange the net bags in respective containers. These containers are then transported to the vendor, e.g. a supermarket, where the containers are displayed in a non-frozen food section, such as in refrigerated displays. A customer may grab the container directly or he or she may grab the net bag. In the latter case, the at least one toothed engaging member ensures that the container is not separated from the net bag but that both bag and container are simultaneously displaced.

The at least one toothed engaging member can be configured to resiliently pivot or bend relative to the side wall it is connected to. For example, by arranging the net bag inside the container, the at least one toothed engaging member is pushed towards the side wall it is connected to. Due to its resiliency, the at least one toothed engaging member will exert a force onto the net bag thereby keeping it in place. The abovementioned resilience can be obtained by selecting appropriate material for realizing the at least one toothed engaging member and/or by the manner in which it is connected to the corresponding side wall.

The container may comprise a pair of toothed engaging members arranged at opposite sides of the container. For example, the container may have a box shape with four side walls. However, the present invention is not limited to such shapes. Cylindrical or pyramid shaped containers may equally be used.

The bottom wall may comprise a plurality of edges, and the one or more side walls may comprise a plurality of first side walls and a plurality of second side walls, each first side wall connected to and extending upward from a respective edge of the bottom wall, wherein each pair of adj acent first side walls is mutually connected through one or more of said second side walls. Alternatively, the bottom wall may comprise a plurality of edges, wherein each of the one or more side walls is connected to and extends upward from a respective edge of the bottom wall, wherein each pair of adjacent side walls is mutually connected, for example by means of glue or other adhesive or means of fixation.

At least one first side wall may comprise a primary first wall segment by which that first side wall is connected to a corresponding edge of the bottom wall, wherein the primary first wall segment has an upper edge. The at least one first side wall may further comprise a secondary first wall segment connected to the primary first wall segment at the upper edge of the primary first wall segment and extending from this upper edge towards the bottom wall. This secondary first wall segment may have a toothed bottom edge spaced apart from the bottom wall. In this case, the secondary first wall segment forms a respective toothed engaging member.

The secondary first wall segment may comprise a first part extending from the upper edge of the primary first wall segment towards the bottom edge, and a second part connected to and extending upward from the bottom edge of the first part. The boundary between the first and second parts may form the toothed bottom edge of the secondary first wall segment.

Furthermore, each second side wall may comprise a plurality of second side wall segments, wherein each second side wall segment connects a first side wall to an other second side wall segment or connects an adjacent second side wall segment to an other adjacent second side wall segment. Preferably, each second side wall comprises a pair of said second side wall segments.

The second side wall segments that connect a pair of adjacent first side walls can be all arranged substantially parallel to one first side wall of the pair of adjacent first side walls. An adhesive, such as hot melt, can be provided for fixing the second side wall segments in said substantial parallel arrangement relative to said one first side wall. Additionally or alternatively, the container may further comprise locking means for locking the second side wall segments in said substantial parallel arrangement relative to said one first side wall.

The locking means may comprise a first locking member being arranged on or in said one first side wall and a second locking member being arranged on or in the other first side wall of the pair of adjacent first side walls, wherein the first and second locking members are configured to co-act for the purpose of locking the second side wall segments in said substantial parallel arrangement relative to said one first side wall.

For example, the one first side wall may comprise a tertiary first wall segment by which that first side wall is connected to a corresponding edge of the bottom wall, wherein the tertiary first wall segment has an upper edge. The one first side wall may further comprise a quaternary first wall segment connected to the tertiary first wall segment at the upper edge of the tertiary first wall segment and extending from this upper edge towards the bottom wall and comprising a first protruding element or first recess forming the first locking member. The other first side wall may comprise a first recess or first protruding element, respectively, forming the second locking member. The first protruding element may extend at least partially parallel to the bottom wall into the first recess. Additionally or alternatively, the first recess can be formed at a boundary between said other first side wall and an adjacent second side wall segment. Furthermore, the abovementioned secondary first wall segment may comprise a second protruding element or second a recess, and the quaternary first wall segment of said one first side wall may comprise a second recess or second protruding element, respectively, this second recess and second protruding element being configured to mutually engage for limiting a movement range of the toothed bottom edge of the secondary first wall segment. Hence, in this configuration, the locking of the second side wall segments and the limiting of the movement range are obtained separately, although the limiting action also improves the locking of the second side wall segments.

Alternatively, the one first side wall may comprise a tertiary first wall segment by which that first side wall is connected to a corresponding edge of the bottom wall, wherein the tertiary first wall segment has an upper edge. The one first side wall may further comprise a quaternary first wall segment connected to the tertiary first wall segment at the upper edge of the tertiary first wall segment and extending from this upper edge towards the bottom wall and comprising a third recess or third protruding element forming the first locking member. In this case, the secondary first wall segment may comprise a third protruding element or third recess forming the second locking member. This third recess and third protruding element are further configured to mutually engage for limiting a movement range of the toothed bottom edge of the secondary first wall segment. In this configuration, the mutual engagement of the third recess and third protruding element limits the movement range of the toothed bottom edge of the secondary first wall segment while at the same time locking the second side wall segments in said substantial parallel arrangement relative to the one first side wall. Furthermore, the third protruding element or third recess of the secondary first wall segment or the second protruding element or second recess of the secondary first wall segment can be formed at a boundary between the first and second parts of that secondary first wall segment. For both configurations, the quaternary first wall segment may comprise a distance element that protrudes towards to the tertiary first wall segment and rests on a second side wall segment among the pair of second side wall segments for keeping the tertiary first wall segment and the quaternary first wall segment spaced apart, and for keeping said second side wall segments that connect a pair of adjacent first side walls all arranged substantially parallel to said one first side wall of the pair of adjacent first side walls. Alternatively, the quaternary first wall segment may comprise a distance element that protrudes towards the secondary first wall segment and rests on a second side wall segment among the pair of second side wall segments for keeping said second side wall segments that connect a pair of adjacent first side walls all arranged substantially parallel to said one first side wall of the pair of adjacent first side walls, and in which the quaternary first wall segment lies against a second side wall segment among the pair of second side wall segments. Such distance will improve the locking of the second side wall segments and will improve the structural integrity of the container.

The container may comprise a liquid absorbing substrate arranged on the bottom wall inside the liquid tight inner space.

Each toothed engaging member may extend from a respective side wall to which it is connected towards the bottom wall. In this manner, it may be easier to insert a net bag into the container than it is to remove the net bag from the container.

The bottom wall and the plurality of side walls can be made from cardboard, preferably an integral piece of cardboard. Alternatively, the container or parts thereof can be made from suitable polymeric materials, such as Polyethylene terephthalate, PET, Polypropylene, PP, or biopolymers such as Polylactic acid, PLA, or Polyhydroxyalkanoate, PHA.

According to a further aspect, the present invention provides a cardboard blank, comprising a cardboard substrate, and a plurality of folding lines, wherein each folding line is a score line or crease line formed on the cardboard substrate. This plurality of folding lines is configured for allowing the cardboard substrate to be folded into the container as defined above.

According to an even further aspect, the present invention relates to a container assembly for forming a container for holding a net bag filled with shellfish and/or crustacean as described above. The container assembly comprises a container body comprising a bottom wall and one or more container body side walls extending upward from the bottom wall and defining a liquid tight inner space in which the net bag can be arranged. The assembly further comprises a container lid having a lid edge with one or more container lid edge segments, a lid opening, and at least one toothed engaging member extending from the lid edge.

The container lid is configured to be attached to an upper edge of the one or more container body side walls such that the one or more container lid edge segments and the one or more container body side walls jointly form one or more side walls of the container. Each toothed engaging member is configured for extending from a respective side wall of the container to which it is connected, and is configured for engaging the net bag. Preferably, the at least one toothed engaging member extends towards the bottom wall when the container lid is attached to the container body. Moreover, the lid edge can be configured to be sealed against the upper edge of the one or more body side walls.

The container body may comprise the bottom wall, and one or more primary first wall segments and/or one or more tertiary first wall segments. Put differently, the features of the abovementioned container related to engaging the net bag, locking the second side wall segments, and/or limiting the movement range of the toothed bottom edge of the secondary first wall segment may all be formed in the container lid. This allows relatively standard container bodies to be used.

According to an even further aspect, the present invention provides a container for holding a net bag filled with shellfish and/or crustacean made using the abovementioned container assembly in which the container lid is attached to an upper edge of the one or more container body side walls.

According to an even further aspect, the present invention provides a container lid comprising a lid edge having one or more container lid edge segments, a lid opening, and at least one toothed engaging member extending from the lid edge, wherein the container lid is configured to be attached to an upper edge of one or more container body side walls of a container body such that the one or more container lid edge segments and the one or more container body side walls jointly form one or more side walls of the container. The container body further comprises a bottom wall from which the one or more container body side walls extend upward, and the container body defining a liquid tight inner space in which a net bag filled with shellfish and/or crustacean can be arranged. Furthermore, each toothed engaging member is configured, after the container lid has been attached to the container body, for extending from a respective side wall of the container to which it is connected, preferably to the bottom wall, and is configured for engaging the net bag.

According to an even further aspect, the present invention provides an assembly comprising a container as defined above and a net bag filled with shellfish and/or crustacean, wherein the net bag is held in the container.

According to an even further aspect, the present invention provides an assembly comprising a container as defined above and edible seaweed arranged inside the container. The assembly further comprises a lid that has at least one opening engaging with said at least one toothed engaging member of the container thereby containing the edible seaweed in the container.

Next, the present invention will be described by referring to the appended drawings, wherein identical reference signs will be used to refer to identical or similar components, and wherein:
Figure 1 schematically illustrates a cross section of a container in accordance with the present invention;
Figures 2-5 illustrate cardboard blanks for realizing respective further containers in accordance with the present invention;
Figure 6 illustrates a photograph of a cross section of the container shown in figure 2; and
Figure 7 illustrates a further container in accordance with the present invention;
Figure 8 illustrates a further cardboard blank for realizing a further container in accordance with the present invention; and
Figures 9A-9C illustrate a further container in accordance with the present invention.

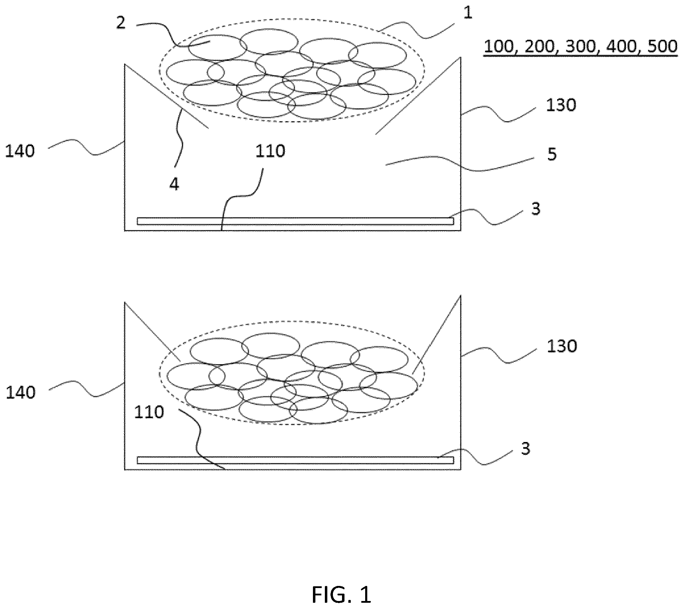

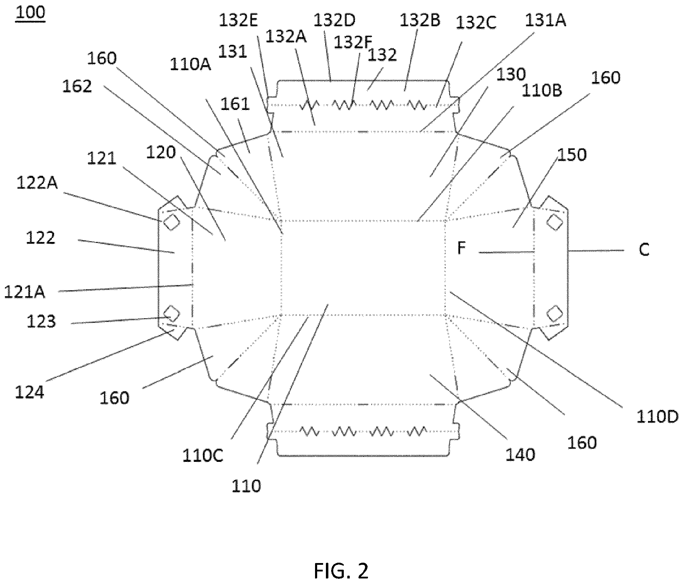

Figure 1 schematically illustrates a cross section of a container in accordance with the present invention. Here, the container is referenced to using reference signs 100-500. Put differently, the container shown in figure 1 may correspond to any of the containers to be discussed in connection with figures 2-7.

The container comprises a pair of toothed engaging members 4 that are able to resiliently pivot or bend relative to the side walls 130, 140 of the container they are connected to. In addition, a liquid absorbing substrate 3 is arranged on bottom wall 110 of the container.

When a net bag 1 comprising shellfish and/or crustacean 2 is arranged in the container, toothed engaging members 4 will pivot or bend towards side walls 130, 140. Engaging members 4 will further engage net bag 1 by protruding through openings in net bag 1.

Engaging members 4 are configured to resiliently pivot or bend relative to side wall 130, 140. Compared to their equilibrium state shown in figure 1 (top), engaging members 4 in the state shown in figure 1 (bottom) will be urged to move back to their equilibrium state thereby exerting a force onto net bag 1. This force will ensure that the container remains attached to net bag 1, even when a user grabs and displaces net bag 1.

Figures 2-5 and figure 8 illustrate cardboard blanks for realizing respective further containers in accordance with the present invention. In these figures, dashed lines F correspond to folding lines that are a score line and/or a crease line, whereas solid lines C correspond to cut lines along which the cardboard blank will be cut or punched.

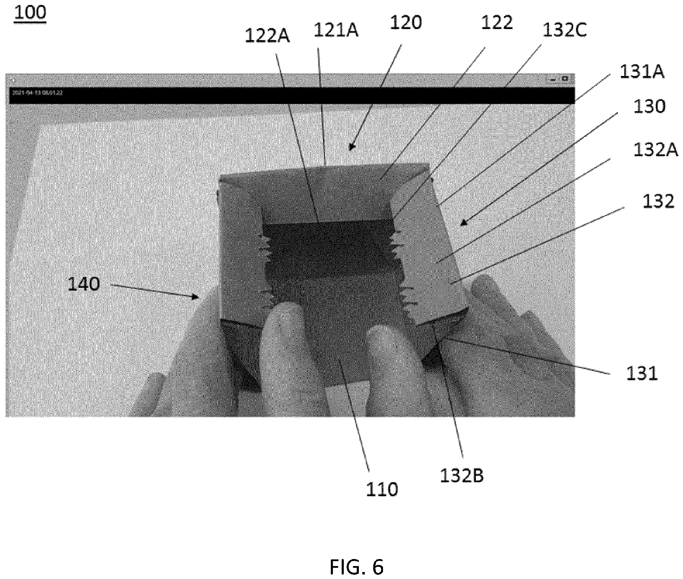

In figure 2, various sections can be identified for forming various parts of the container. Hereinafter, the reference signs used for referring to such sections will also be used for referring to the corresponding parts of the container. For example, a section 110 corresponds to bottom wall 110 of the container. Similarly, the cardboard blank in figure 2 and the container formed using this cardboard blank will both be referred to using reference sign 100. It is noted that figure 6 illustrates a photograph of a cross section of the container shown in figure 2.

Cardboard blank 100 comprises first side walls 120, 130, 140, 150. Cardboard blank 100 further comprises second side walls 160 that connect a pair of first side walls. Each second side wall 160 comprises a pair of second side wall segments 161, 162 that are mutually connected using a folding line. To facilitate folding of cardboard blank 100 into a container, parts of the folding line may be interrupted and replaced by a cut line part. The same holds for the folding lines with which second side wall segments 161, 162 are connected to first side walls 120, 130, 140, 150.

First side wall 120 comprises a segment 121 that is connected to edge 110A of bottom wall 110 and that has an upper edge 121A. First side wall 120 further comprises a segment 122 that is connected to upper edge 121A. Segment 122 comprises two openings 123 that will be described next and has a lower edge 122A. In addition, segment 122 comprises protruding sections 124.

First side wall 130 comprises a segment 131 that is connected to edge 110B of bottom wall 110 and that has an upper edge 131A. First side wall 130 further comprises a segment 132 that is connected to upper edge 131A. Segment 132 comprises a first part 132A that extends between upper edge 131A and edge 132C, and a second part 132B that extends between edge 132C and edge 132D.

Segment 132 comprises a protruding element 132E that is formed on first part 132A and second part 132B.

First side wall 140 is shaped similar to first side wall 130, and first side wall 120 is shaped to first side wall 150.

To form a container from cardboard blank 100, first side walls 120, 130, 140, 150 are brought in a vertical position relative to bottom wall 110. At the same time, second wall segments 161, 162 are mutually folded such that second wall segments 161, 162 come to lie against segment 121.

Next, protruding element 124 is folded by approximately 90 degrees relative to segment 122, and segment 122 is folded by approximately 180 degrees relative to segment 121. As a result, protruding element 124 will rest on second wall segments 161, 162 thereby ensuring that segments 121 and 122 are kept at a distance and ensuring that the container remains in a folded state.

Then, part 132B is folded relative to part 132A by approximately 180 degrees. Due to the toothed cut line sections 132F and folding line sections making up edge 132C, a toothed edge 132C is formed by folding part 132B relative to part 132A. The combination of parts 132A, 132B is then folded relative to segment 131 such that protruding element 132E is received in opening 123. This engagement will limit the movement range of edge 132C. More in particular, the angle between parts 132A, 132B and segment 131 is limited by the size and shape of opening 123. However, at the same time, the engagement will keep second wall segments 161, 162 pressed against segment 121 thereby maintaining the shape of container 100. This pressing action is enhanced by the provision of protruding element 124 acting as a distance element.

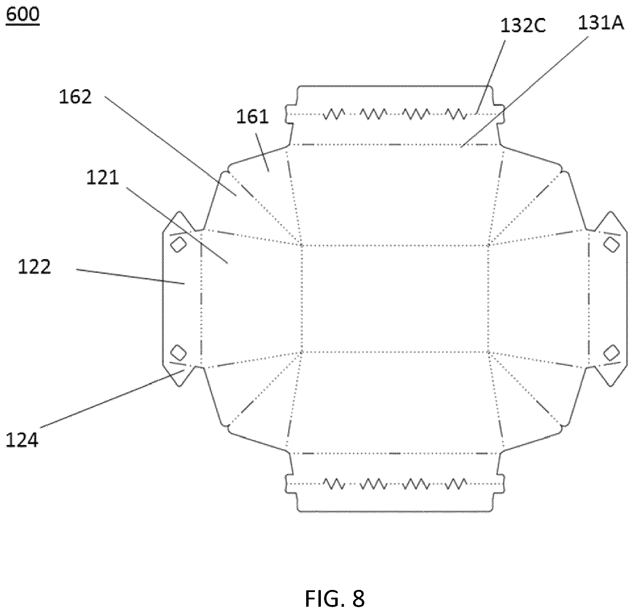

In an alternative embodiment of a cardboard blank 600, shown in figure 8, protruding element 124 is shaped differently. In this embodiment, second wall segments 161, 162 lie against segment 121 and segment 122 lies against segment 161. Protruding element 124 is folded such that it extends towards upper edge 131A and/or edge 132C. In this embodiment, segment 122 is resiliently pushed inward by second wall segments 161, 162, which movement is limited by protruding element 124. In this manner, the container remains in the folded state.

First side walls 140, 150 are folded similar to first side walls 130, 120, respectively.

When a net bag is inserted in container 100, edge 132C is pushed backwards towards segment 131. Due to the resiliency of the connection between segments 131 and 132, edge 132C will exert a force onto the net bag thereby locking the net bag with respect to container 100. When a user picks the net bag when it is arranged in container 100, the net bag and container 100 will move as a single unit. This prevents or limits any liquid that may emerge from the shellfish or crustacean during transport from leaving container 100. This can effect can be increased by providing a liquid absorbing substrate 3 as shown in figure 1 on bottom wall 110.

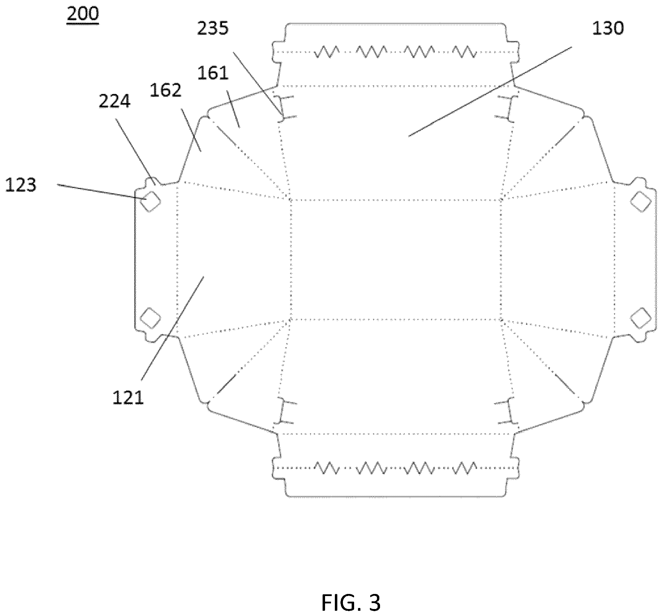

Figure 3 provides a further cardboard blank 200 that is similar to that shown in figure 2 with the exception that protruding elements 124 in figure 2 have been replaced by protruding element 224 in figure 3. This element is configured to be inserted into recess 235 that is formed using several cut lines. It is noted that protruding element 224 is inserted into recess 235 after having folded second wall segments 161, 162 against segment 121.

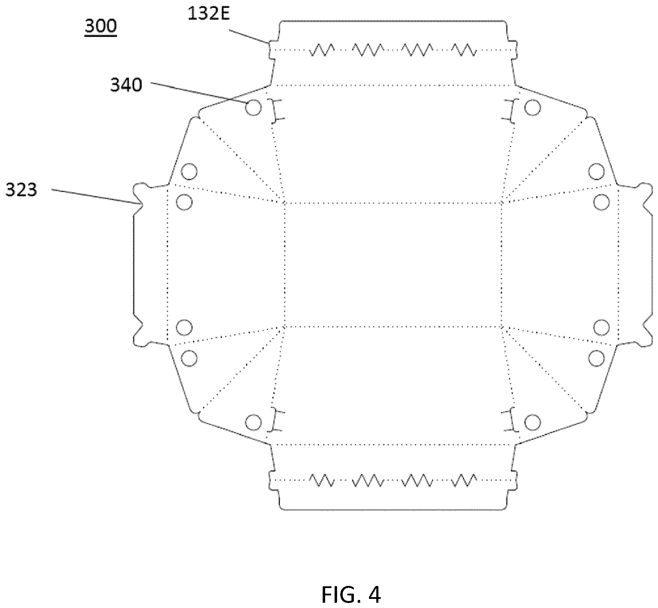

Figure 4 provides a further cardboard blank 300 that is similar to that shown in figure 3 with the exception that recesses 123 in figure 3 have been replaced by recesses 323 in figure 4. These recesses cooperate with protruding elements 132E similar to the embodiments in figures 2 and 3. Figure 4 further illustrates holes 340 through which an adhesive can be applied, such as a hot-melt, for the purpose of fixedly connecting the first side walls and second side walls. Such holes may equally be used in other embodiments at identical or different positions.

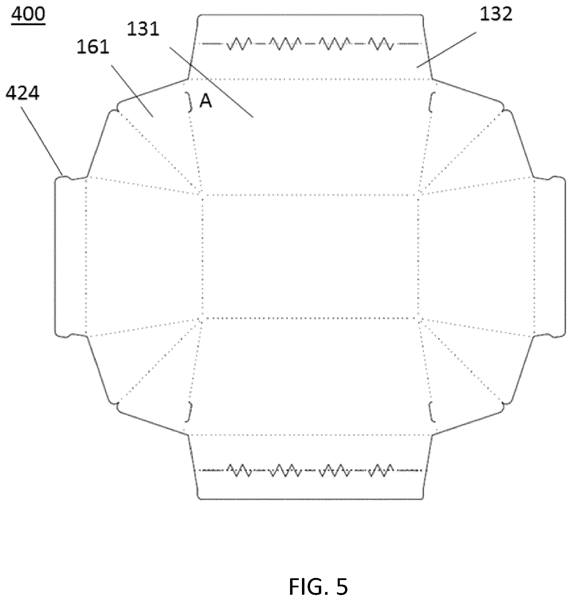

Figure 5 provides a further cardboard blank 400 that is similar to that shown in figure 4 with the exception that protruding elements 132E have been omitted. Hence, in this embodiment the pivoting movement of segment 132 relative to segment 131 is not limited to the extent as with the embodiments of figures 2-4. Furthermore, in this embodiment, protruding elements 424 engage in a recess A formed between first side wall segment 131 and second wall segment 161.

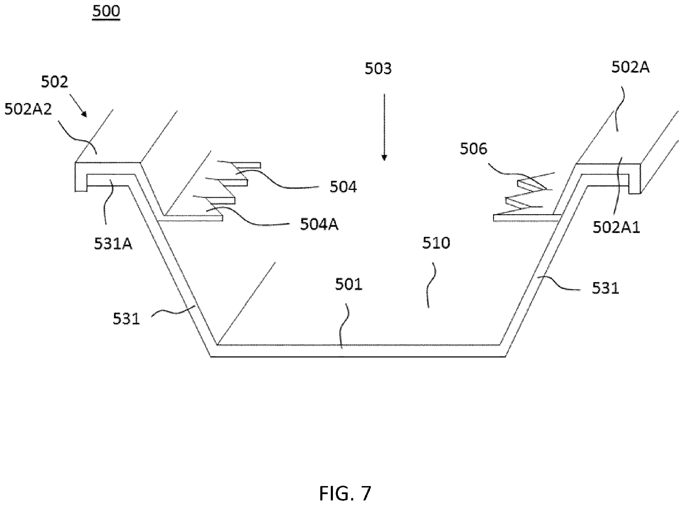

Figure 7 illustrates a container 500 in accordance with the present invention. Contrary to containers 100-400, container 500 is preferably made from a polymeric material, such as Polyethylene terephthalate, PET, Polypropylene, PP, or biopolymers such as Polylactic acid, PLA, or Polyhydroxyalkanoate, PHA. Container 500 comprises a container body 501 that includes a bottom wall 510 and one or more container body side walls 531. Container 500 further comprises a container lid 502 having a lid edge 502A that may comprise one or more lid edge segments 502A1, 502A2. Container 500 further comprises a pair of toothed engaging members 504 arranged at opposite sides of container lid 502 and in between which a lid opening 503 is provided. It should be noted that container 500 may comprises less of more toothed engaging members 504. Furthermore, toothed engaging members 504 may be partially cut along lines 506 to allow individual teeth 504A to bend more easily.

In figure 7, container lid 502 is sealed or otherwise attached against upper edges 531A of container body side wall 531 as a result of which lid edge segments 502A1, 502A2 and the one or more container body side walls 531 jointly form a pair of side walls of container 500.

An advantage of container 500 and more in particular of container lid 502, is that it can be applied to off-the-shelf container bodies 501. The functionality of engaging the net bag as discussed in conjunction with figures 1-6 is realized in container lid 502.

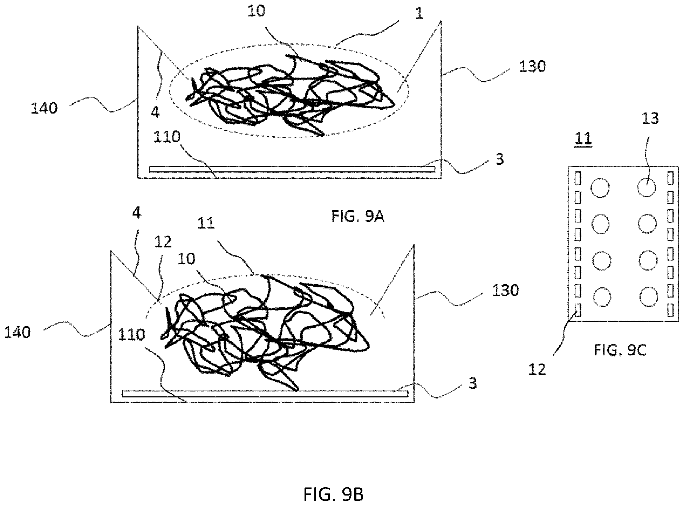

Figures 9A-9C illustrate a container in accordance with the present invention, for example any of the containers of figures 2-5, 7, and 8, which is used for holding edible seaweed.

In figure 9A, the container is holding a net bag 1 filled with edible seaweed 10. In this embodiment, the toothed engaging members 4 engage net bag 1 in a manner similar to engaging net bag 1 in figure 1.

In figures 9B and 9C, a different application is shown of the same container. In this case, edible seaweed 10 is not packaged in a net bag but is arranged loosely in the container. In this case, a lid 11, of which a top view is shown in figure 9C, is arranged on top of seaweed 10. Lid 11 is provided with openings 12 that engage with toothed engaging members 4. Accordingly, seaweed 10 is contained in the container. Additional openings 13 may be provided in lid 11 to allow a user to visually inspect the contents of the container.

In the above, the present invention has been described using detailed embodiments thereof. However, it should be noted that the present invention is not limited to these embodiments. Rather, various modifications to the embodiments are possible without deviating from the scope of the present application that is defined by the appended claims.

## Claims

1. A container (100; 200; 300; 400; 500; 600) for holding a net bag (1) filled with shellfish and/or crustacean (2), the container comprising a bottom wall (110) and one or more side walls (120, 130, 140, 150) extending upward from the bottom wall,
**characterized in that** the container defines a liquid tight inner space (5) in which the net bag can be at least partially arranged, **and in that** the container further comprises at least one toothed engaging member (4), each toothed engaging member extending from a respective side wall to which it is connected and being configured for engaging the net bag to thereby provide a fixation of the net bag relative to the container.

2. The container according to claim 1, wherein the at least one toothed engaging member is configured for engaging the net bag when arranging the net bag inside the container, and for maintaining said engagement when a user grabs and displaces the net bag; and/or
wherein the at least one toothed engaging member is configured to resiliently pivot relative to the side wall it is connected to; and/or
wherein the container comprises a pair of toothed engaging members arranged at opposite sides of the container.

3. The container according to any of the previous claims, wherein the bottom wall comprises a plurality of edges (110A, 110B, 110C, 110D), and wherein the one or more side walls comprise a plurality of first side walls (120, 130, 140, 150) and a plurality of second side walls (160), each first side wall connected to and extending upward from a respective edge of the bottom wall, wherein each pair of adjacent first side walls is mutually connected through one or more of said second side walls,
wherein at least one first side wall (130) preferably comprises:
a primary first wall segment (131) by which that first side wall is connected to a corresponding edge (110B, 110C) of the bottom wall, said primary first wall segment having an upper edge (131A); and
a secondary first wall segment (132) connected to the primary first wall segment at the upper edge of the primary first wall segment and extending from this upper edge towards the bottom wall, said secondary first wall segment having a bottom edge (132C) spaced apart from the bottom wall, wherein the bottom edge of the secondary first wall segment is toothed, wherein the secondary first wall segment forms a respective toothed engaging member,
wherein the secondary first wall segment more preferably comprises a first part (132A) extending from the upper edge of the primary first wall segment towards the bottom edge (132C), and a second part (132B) connected to and extending upward from the bottom edge of the first part, wherein the boundary between the first and second parts forms the toothed bottom edge of the secondary first wall segment.

4. The container according to claim 3, wherein each second side wall comprises a plurality of second side wall segments (161, 162), wherein each second side wall segment connects a first side wall to an other second side wall segment or connects an adjacent second side wall segment to an other adjacent second side wall segment, wherein each second side wall preferably comprises a pair of said second side wall segments.

5. The container according to claim 4, wherein the second side wall segments that connect a pair of adjacent first side walls are all arranged substantially parallel to one first side wall of the pair of adjacent first side walls, the container preferably further comprising an adhesive for fixing the second side wall segments in said substantial parallel arrangement relative to said one first side wall.

6. The container according to claim 5, further comprising locking means for locking the second side wall segments in said substantial parallel arrangement relative to said one first side wall, wherein the locking means preferably comprise a first locking member being arranged on or in said one first side wall and a second locking member being arranged on or in the other first side wall of the pair of adjacent first side walls, wherein the first and second locking members are configured to co-act for the purpose of locking the second side wall segments in said substantial parallel arrangement relative to said one first side wall,
wherein said one first side wall (120) preferably comprises:
a tertiary first wall segment (121) by which that first side wall is connected to a corresponding edge (110A) of the bottom wall, said tertiary first wall segment having an upper edge (121A);
a quaternary first wall segment (122) connected to the tertiary first wall segment at the upper edge of the tertiary first wall segment and extending from this upper edge towards the bottom wall and comprising a first protruding element (224) or first recess forming the first locking member;
wherein said other first side wall (130) comprises a first recess (235) or first protruding element, respectively, forming said second locking member,
wherein, preferably:
the first protruding element extends at least partially parallel to the bottom wall into the first recess; and/or
the first recess is formed at a boundary between said other first side wall (130) and an adjacent second side wall segment (161); and/or
in so far as depending on claim 3, the secondary first wall segment (132) comprises a second protruding element (132E) or a second recess, and wherein the quaternary first wall segment (122) of said one first side wall (120) comprises a second recess (123) or second protruding element, respectively, this second recess and second protruding element being configured to mutually engage for limiting a movement range of the toothed bottom edge of the secondary first wall segment, wherein the third protruding element or third recess of the secondary first wall segment or the second protruding element or second recess of the secondary first wall segment is preferably formed at a boundary between the first and second parts of that secondary first wall segment.

7. The container according to claim 6 and claim 3, wherein said one first side wall (120) comprises:
a tertiary first wall segment (121) by which that first side wall is connected to a corresponding edge (110A) of the bottom wall, said tertiary first wall segment having an upper edge (121A); and
a quaternary first wall segment (122) connected to the tertiary first wall segment at the upper edge of the tertiary first wall segment and extending from this upper edge towards the bottom wall and comprising a third recess (123) or third protruding element forming the first locking member,
wherein the secondary first wall segment (132) comprises a third protruding element (132E) or third recess forming the second locking member, this third recess and third protruding element being further configured to mutually engage for limiting a movement range of the toothed bottom edge of the secondary first wall segment,
wherein the third protruding element or third recess of the secondary first wall segment or the second protruding element or second recess of the secondary first wall segment is preferably formed at a boundary between the first and second parts of that secondary first wall segment.

8. The container according to claim 6 or 7, wherein the quaternary first wall segment (122) comprises a distance element (124) that:
protrudes towards to the tertiary first wall segment (121) and rests on a second side wall segment (161) among the pair of second side wall segments for keeping the tertiary first wall segment and the quaternary first wall segment spaced apart, and for keeping said second side wall segments that connect a pair of adjacent first side walls all arranged substantially parallel to said one first side wall of the pair of adjacent first side walls; or
protrudes towards the secondary first wall segment (132) and rests on a second side wall segment (161) among the pair of second side wall segments for keeping said second side wall segments that connect a pair of adjacent first side walls all arranged substantially parallel to said one first side wall of the pair of adjacent first side walls, and in which the quaternary first wall segment (122) lies against a second side wall segment (161) among the pair of second side wall segments.

9. The container according to any of the previous claims, further comprising a liquid absorbing substrate (3) arranged on the bottom wall inside the liquid tight inner space, and/or wherein each toothed engaging member extends from the respective side wall to which it is connected towards the bottom wall.

10. The container according to any of the previous claims, wherein the bottom wall and the one or more side walls are made from cardboard, wherein the bottom wall and the one or more side walls are preferably made from an integral piece of cardboard.

11. A cardboard blank, comprising:
a cardboard substrate (100, 200, 300, 400); and
a plurality of folding lines, each folding line being a score line (S) or crease line (C) formed on the cardboard substrate,
wherein the plurality of folding lines is configured for allowing the cardboard substrate to be folded into the container as defined in claim 10.

12. A container lid (502) comprising a lid edge (502A) having one or more container lid edge segments (502A1, 502A2), a lid opening (503), and at least one toothed engaging member (504) extending from the lid edge, wherein the container lid is configured to be attached to an upper edge (531A) of one or more container body side walls (531) of a container body (501) such that the one or more container lid edge segments and the one or more container body side walls jointly form one or more side walls of the container, said container body further comprising a bottom wall (510) from which the one or more container body side walls extend upward, the container body defining a liquid tight inner space in which a net bag filled with shellfish and/or crustacean can be arranged,
wherein each toothed engaging member is configured, after the container lid has been attached to the container body, for extending from a respective side wall of the container to which it is connected, and is configured for engaging the net bag when arranging the net bag inside the container body, and for maintaining said engagement when a user grabs and displaces the net bag.

13. A container assembly for forming a container (500) for holding a net bag (1) filled with shellfish and/or crustacean (2) as defined in any of the claims 1-10, the container assembly comprising:
a container body (501) comprising a bottom wall (510) and one or more container body side walls (531) extending upward from the bottom wall and defining a liquid tight inner space in which the net bag can be arranged; and
a container lid (502) as defined in claim 12, wherein the lid edge is preferably configured to be sealed against the upper edge of the one or more body side walls.

14. A container (500) for holding a net bag (1) filled with shellfish and/or crustacean (2) as defined in any of the claims 1-10,
wherein the container further comprises a container lid (502) as defined in claim 12, attached to an upper edge (531A) of the one or more side walls.

15. An assembly comprising a container as defined in any of the claims 1-10 or claim 14, and:
a net bag (1) filled with shellfish and/or crustacean (2), wherein the net bag is held in the container; or
edible seaweed (10) arranged inside the container, and a lid (11) comprising at least one opening (12), said opening engaging with said at least one toothed engaging member of the container thereby containing the edible seaweed in the container.

## Patentansprüche

1. Ein Behälter (100; 200; 300; 400; 500; 600) zur Aufnahme eines mit Schalen- und/oder Krustentieren (2) gefüllten Netzbeutels (1), wobei der Behälter eine Bodenwand (110) und eine oder mehrere Seitenwände (120, 130, 140, 150) aufweist, die sich von der Bodenwand nach oben erstrecken,
**dadurch gekennzeichnet, dass** der Behälter einen flüssigkeitsdichten Innenraum (5) definiert, in dem der Netzbeutel zumindest teilweise angeordnet werden kann, **und dass** der Behälter ferner mindestens ein gezahntes Eingriffselement (4) aufweist, wobei sich jedes gezahnte Eingriffselement von einer jeweiligen Seitenwand aus erstreckt, mit der es verbunden ist, und so konfiguriert ist, dass es in den Netzbeutel eingreift, um dadurch eine Fixierung des Netzbeutels relativ zu dem Behälter bereitzustellen.

2. Der Behälter nach Anspruch 1, wobei das mindestens eine gezahnte Eingriffselement so konfiguriert ist, dass es in den Netzbeutel eingreift, wenn der Netzbeutel im Inneren des Behälters angeordnet wird, und dass es diesen Eingriff aufrechterhält, wenn ein Benutzer den Netzbeutel ergreift und verschiebt; und/oder
wobei das mindestens eine gezahnte Eingriffselement so konfiguriert ist, dass es relativ zu der Seitenwand, mit der es verbunden ist, elastisch schwenkt; und/oder
wobei der Behälter ein Paar von gezahnten Eingriffselementen aufweist, die an gegenüberliegenden Seiten des Behälters angeordnet sind.

3. Der Behälter nach einem der vorhergehenden Ansprüche, wobei die Bodenwand eine Vielzahl von Kanten (110A, 110B, 110C, 110D) aufweist, und wobei die eine oder die mehreren Seitenwände eine Vielzahl von ersten Seitenwänden (120, 130, 140, 150) und eine Vielzahl von zweiten Seitenwänden (160) aufweisen, wobei jede erste Seitenwand mit einer jeweiligen Kante der Bodenwand verbunden ist und sich von dieser nach oben erstreckt, wobei jedes Paar von benachbarten ersten Seitenwänden durch eine oder mehrere der zweiten Seitenwände miteinander verbunden ist,
wobei mindestens eine erste Seitenwand (130) vorzugsweise Folgendes aufweist:
ein primäres erstes Wandsegment (131), durch das diese erste Seitenwand mit einer entsprechenden Kante (110B, 110C) der Bodenwand verbunden ist, wobei das primäre erste Wandsegment eine obere Kante (131A) aufweist; und
ein sekundäres erstes Wandsegment (132), das mit dem primären ersten Wandsegment an der oberen Kante des primären ersten Wandsegments verbunden ist und sich von dieser oberen Kante in Richtung der Bodenwand erstreckt, wobei das sekundäre erste Wandsegment eine von der Bodenwand beabstandete untere Kante (132C) aufweist, wobei die untere Kante des sekundären ersten Wandsegments gezahnt ist, wobei das sekundäre erste Wandsegment ein entsprechendes gezahntes Eingriffselement bildet,
wobei das sekundäre erste Wandsegment besonders bevorzugt einen ersten Teil (132A), der sich von der oberen Kante des primären ersten Wandsegments in Richtung der unteren Kante (132C) erstreckt, und einen zweiten Teil (132B), der mit der unteren Kante des ersten Teils verbunden ist und sich von dieser nach oben erstreckt, aufweist, wobei die Grenze zwischen dem ersten und dem zweiten Teil die gezahnte untere Kante des sekundären ersten Wandsegments bildet.

4. Der Behälter nach Anspruch 3, wobei jede zweite Seitenwand eine Vielzahl von zweiten Seitenwandsegmenten (161, 162) aufweist, wobei jedes zweite Seitenwandsegment eine erste Seitenwand mit einem anderen zweiten Seitenwandsegment verbindet oder ein benachbartes zweites Seitenwandsegment mit einem anderen benachbarten zweiten Seitenwandsegment verbindet, wobei jede zweite Seitenwand vorzugsweise ein Paar der zweiten Seitenwandsegmente aufweist.

5. Der Behälter nach Anspruch 4, wobei die zweiten Seitenwandsegmente, die ein Paar benachbarter erster Seitenwände verbinden, alle im Wesentlichen parallel zu einer ersten Seitenwand des Paars benachbarter erster Seitenwände angeordnet sind, wobei der Behälter vorzugsweise ferner einen Klebstoff zum Fixieren der zweiten Seitenwandsegmente in der im Wesentlichen parallelen Anordnung relativ zu der einen ersten Seitenwand aufweist.

6. Der Behälter nach Anspruch 5, der ferner Verriegelungsmittel zum Verriegeln der zweiten Seitenwandsegmente in der im Wesentlichen parallelen Anordnung relativ zu der einen ersten Seitenwand aufweist, wobei die Verriegelungsmittel vorzugsweise ein erstes Verriegelungselement, das an oder in der einen ersten Seitenwand angeordnet ist, und ein zweites Verriegelungselement, das an oder in der anderen ersten Seitenwand des Paars benachbarter erster Seitenwände angeordnet ist, aufweisen, wobei das erste und das zweite Verriegelungselement so konfiguriert sind, dass sie für den Zweck des Verriegelns der zweiten Seitenwandsegmente in der im Wesentlichen parallelen Anordnung relativ zu der einen ersten Seitenwand zusammenwirken,
wobei die eine erste Seitenwand (120) vorzugsweise aufweist:
ein tertiäres erstes Wandsegment (121), durch das diese erste Seitenwand mit einer entsprechenden Kante (110A) der Bodenwand verbunden ist, wobei das tertiäre erste Wandsegment eine obere Kante (121A) aufweist;
ein quaternäres erstes Wandsegment (122), das mit dem tertiären ersten Wandsegment an der oberen Kante des tertiären ersten Wandsegments verbunden ist und sich von dieser oberen Kante in Richtung der Bodenwand erstreckt und ein erstes vorstehendes Element (224) oder eine erste Ausnehmung aufweist, das/die das erste Verriegelungselement bildet;
wobei die andere erste Seitenwand (130) eine erste Ausnehmung (235) bzw. ein erstes vorstehendes Element aufweist, die/das das zweite Verriegelungselement bildet,
wobei, vorzugsweise:
das erste vorstehende Element sich zumindest teilweise parallel zur Bodenwand in die erste Ausnehmung erstreckt; und/oder
die erste Ausnehmung an einer Grenze zwischen der anderen ersten Seitenwand (130) und einem benachbarten zweiten Seitenwandsegment (161) ausgebildet ist; und/oder insofern als in Abhängigkeit von Anspruch 3 das sekundäre erste Wandsegment (132) ein zweites vorstehendes Element (132E) oder eine zweite Ausnehmung aufweist, und wobei das quaternäre erste Wandsegment (122) der einen ersten Seitenwand (120) eine zweite Ausnehmung (123) bzw. ein zweites vorstehendes Element aufweist, wobei diese zweite Ausnehmung und das zweite vorstehende Element so konfiguriert sind, dass sie ineinander eingreifen, um einen Bewegungsbereich der gezahnten Bodenkante des sekundären ersten Wandsegments zu begrenzen, wobei das dritte vorstehende Element oder die dritte Ausnehmung des sekundären ersten Wandsegments oder das zweite vorstehende Element oder die zweite Ausnehmung des sekundären ersten Wandsegments vorzugsweise an einer Grenze zwischen den ersten und zweiten Teilen dieses sekundären ersten Wandsegments ausgebildet ist.

7. Der Behälter nach Anspruch 6 und Anspruch 3, wobei die eine erste Seitenwand (120) aufweist:
ein tertiäres erstes Wandsegment (121), durch das diese erste Seitenwand mit einer entsprechenden Kante (110A) der Bodenwand verbunden ist, wobei das tertiäre erste Wandsegment eine obere Kante (121A) aufweist; und
ein quaternäres erstes Wandsegment (122), das mit dem tertiären ersten Wandsegment an der oberen Kante des tertiären ersten Wandsegments verbunden ist und sich von dieser oberen Kante in Richtung der Bodenwand erstreckt und eine dritte Ausnehmung (123) oder ein drittes vorstehendes Element aufweist, die/das das erste Verriegelungselement bildet,
wobei das sekundäre erste Wandsegment (132) ein drittes vorstehendes Element (132E) oder eine dritte Ausnehmung aufweist, das/die das zweite Verriegelungselement bildet, wobei diese dritte Ausnehmung und das dritte vorstehende Element weiterhin so konfiguriert sind, dass sie gegenseitig ineinander eingreifen, um einen Bewegungsbereich der gezahnten Bodenkante des sekundären ersten Wandsegments zu begrenzen,
wobei das dritte vorstehende Element oder die dritte Ausnehmung des sekundären ersten Wandsegments oder das zweite vorstehende Element oder die zweite Ausnehmung des sekundären ersten Wandsegments vorzugsweise an einer Grenze zwischen dem ersten und dem zweiten Teil dieses sekundären ersten Wandsegments ausgebildet ist.

8. Der Behälter nach Anspruch 6 oder 7, wobei das quaternäre erste Wandsegment (122) ein Distanzelement (124) aufweist, das:
in Richtung des tertiären ersten Wandsegments (121) vorsteht und auf einem zweiten Seitenwandsegment (161) aus dem Paar der zweiten Seitenwandsegmente aufliegt, um das tertiäre erste Wandsegment und das quaternäre erste Wandsegment voneinander beabstandet zu halten und um die zweiten Seitenwandsegmente, die ein Paar benachbarter erster Seitenwände verbinden, alle im Wesentlichen parallel zu der einen ersten Seitenwand des Paars benachbarter erster Seitenwände angeordnet zu halten; oder
in Richtung des sekundären ersten Wandsegments (132) vorsteht und auf einem zweiten Seitenwandsegment (161) aus dem Paar der zweiten Seitenwandsegmente aufliegt, um die zweiten Seitenwandsegmente, die ein Paar von benachbarten ersten Seitenwänden verbinden, alle im Wesentlichen parallel zu der einen ersten Seitenwand des Paars von benachbarten ersten Seitenwänden angeordnet zu halten, und bei dem das quaternäre erste Wandsegment (122) an einem zweiten Seitenwandsegment (161) aus dem Paar von zweiten Seitenwandsegmenten liegt.

9. Der Behälter nach einem der vorhergehenden Ansprüche, ferner aufweisend ein flüssigkeitsabsorbierendes Substrat (3), das an der Bodenwand innerhalb des flüssigkeitsdichten Innenraums angeordnet ist, und/oder
wobei sich jedes gezahnte Eingriffselement von der jeweiligen Seitenwand, mit der es verbunden ist, in Richtung der Bodenwand erstreckt.

10. Der Behälter nach einem der vorhergehenden Ansprüche, wobei die Bodenwand und die eine oder mehreren Seitenwände aus Karton hergestellt sind, wobei die Bodenwand und die eine oder mehreren Seitenwände vorzugsweise aus einem einzigen Stück Karton hergestellt sind.

11. Ein Kartonzuschnitt, aufweisend:
ein Kartonsubstrat (100, 200, 300, 400); und
eine Vielzahl von Faltlinien, wobei jede Faltlinie eine Rilllinie (S) oder eine Falzlinie (C) ist, die auf dem Kartonsubstrat ausgebildet ist,
wobei die Mehrzahl von Faltlinien so konfiguriert ist, dass sie es ermöglichen, das Kartonsubstrat zu dem in Anspruch 10 definierten Behälter zu falten.

12. Ein Behälterdeckel (502), aufweisend einen Deckelrand (502A) mit einem oder mehreren Behälterdeckelrandsegmenten (502A1, 502A2), eine Deckelöffnung (503) und mindestens ein gezahntes Eingriffselement (504), das sich vom Deckelrand aus erstreckt, wobei der Behälterdeckel so konfiguriert ist, dass er an einer oberen Kante (531A) einer oder mehrerer Behälterkörperseitenwände (531) eines Behälterkörpers (501) befestigt werden kann, so dass das eine oder die mehreren Behälterdeckelrandsegmente und die eine oder die mehreren Behälterkörperseitenwände gemeinsam eine oder mehrere Seitenwände des Behälters bilden, wobei der Behälterkörper ferner eine Bodenwand (510) aufweist, von der sich die eine oder die mehreren Behälterkörperseitenwände nach oben erstrecken, wobei der Behälterkörper einen flüssigkeitsdichten Innenraum definiert, in dem ein mit Schalen- und/oder Krustentieren gefüllter Netzbeutel angeordnet werden kann,
wobei jedes gezahnte Eingriffselement so konfiguriert ist, dass es sich nach dem Anbringen des Behälterdeckels am Behälterkörper von einer jeweiligen Seitenwand des Behälters, mit dem es verbunden ist, erstreckt und so konfiguriert ist, dass es mit dem Netzbeutel in Eingriff kommt, wenn der Netzbeutel im Inneren des Behälterkörpers angeordnet wird, und dass es diesen Eingriff aufrechterhält, wenn ein Benutzer den Netzbeutel ergreift und verschiebt.

13. Eine Behälteranordnung zur Bildung eines Behälters (500) zur Aufnahme eines mit Schalen- und/oder Krustentieren (2) gefüllten Netzbeutels (1) nach einem der Ansprüche 1 bis 10, wobei die Behälteranordnung aufweist:
einen Behälterkörper (501), der eine Bodenwand (510) und eine oder mehrere Behälterkörperseitenwände (531) aufweist, die sich von der Bodenwand nach oben erstrecken und einen flüssigkeitsdichten Innenraum definieren, in dem der Netzbeutel angeordnet werden kann; und
einen Behälterdeckel (502) nach Anspruch 12, wobei der Deckelrand vorzugsweise so gestaltet ist, dass er gegen den oberen Rand der einen oder mehreren Körperseitenwände abgedichtet ist.

14. Ein Behälter (500) zur Aufnahme eines mit Schalen- und/oder Krustentieren (2) gefüllten Netzbeutels (1) nach einem der Ansprüche 1-10,
wobei der Behälter ferner einen Behälterdeckel (502) gemäß Anspruch 12 aufweist, der an einem oberen Rand (531A) der einen oder mehreren Seitenwände angebracht ist.

15. Eine Anordnung, die einen Behälter gemäß einem der Ansprüche 1-10 oder Anspruch 14 aufweist, und:
einen mit Schalen- und/oder Krustentieren (2) gefüllten Netzbeutel (1), wobei der Netzbeutel in dem Behälter gehalten wird; oder
essbaren Seetang (10), der im Inneren des Behälters angeordnet ist, und einen Deckel (11), der mindestens eine Öffnung (12) aufweist, wobei die Öffnung in das mindestens eine gezahnte Eingriffselement des Behälters eingreift, wodurch der essbare Seetang in dem Behälter gehalten wird.

## Revendications

1. Conteneur (100 ; 200 ; 300 ; 400 ; 500 ; 600) destiné à contenir une poche en filet (1) remplie de coquillages et/ou de crustacés (2), le conteneur comprenant une paroi inférieure (110) et une ou plusieurs parois latérales (120, 130, 140, 150) s'étendant vers le haut à partir de la paroi inférieure,
**caractérisé en ce que** le conteneur définit un espace interne étanche au liquide (5) dans lequel la poche en filet peut être au moins partiellement agencée, et **en ce que** le conteneur comprend, en outre, au moins un élément de couplage denté (4), chaque élément de couplage denté s'étendant à partir d'une paroi latérale respective à laquelle il est relié et étant configuré de manière à se coupler à la poche en filet afin d'assurer ainsi la fixation de la poche en filet par rapport au conteneur.

2. Conteneur selon la revendication 1, dans lequel le au moins un élément de couplage denté est configuré de manière à se coupler à la poche en filet lors de l'agencement de la poche en filet à l'intérieur du conteneur et à maintenir ledit couplage lorsqu'un utilisateur saisit et déplace la poche en filet ; et/ou
dans lequel le au moins un élément de couplage denté est configuré de manière à pivoter élastiquement par rapport à la paroi latérale à laquelle il est relié ; et/ou
dans lequel le conteneur comprend une paire d'éléments de couplage dentés agencés sur des côtés opposés du conteneur.

3. Conteneur selon l'une quelconque des revendications précédentes, dans lequel la paroi inférieure comprend une pluralité de bords (110A, 110B, 110C, 110D) et dans lequel la ou les parois latérales comprennent une pluralité de premières parois latérales (120, 130, 140, 150) et une pluralité de secondes parois latérales (160), chaque première paroi latérale étant reliée à un bord respectif de la paroi inférieure et s'étendant vers le haut à partir de cette dernière, dans lequel les parois de chaque paire de premières parois latérales adjacentes sont reliée mutuellement par l'intermédiaire d'une ou plusieurs desdites secondes parois latérales,
dans lequel au moins une première paroi latérale (130) comprend de préférence :
un segment de première paroi primaire (131) par lequel cette première paroi latérale est reliée à un bord correspondant (110B, 110C) de la paroi inférieure, ledit segment de première paroi primaire comportant un bord supérieur (131A) ; et
un segment de première paroi secondaire (132) relié au segment de première paroi primaire au niveau du bord supérieur du segment de première paroi primaire et s'étendant à partir de ce bord supérieur vers la paroi inférieure, ledit segment de première paroi secondaire comportant un bord inférieur (132C) espacé par rapport à la paroi inférieure, dans lequel le bord inférieur du segment de première paroi secondaire est denté, dans lequel le segment de première paroi secondaire forme un élément de couplage denté respectif,
dans lequel le segment de première paroi secondaire comprend, plus préférablement, une première partie (132A) s'étendant à partir du bord supérieur du segment de première paroi primaire vers le bord inférieur (132C), et une seconde partie (132B) reliée au bord inférieur de la première partie et s'étendant vers le haut à partir de ce dernier, dans lequel la limite entre les première et seconde parties forme le bord inférieur denté du segment de première paroi secondaire.

4. Conteneur selon la revendication 3, dans lequel chaque seconde paroi latérale comprend une pluralité de segments de seconde paroi latérale (161, 162), dans lequel chaque segment de seconde paroi latérale relie un première paroi latérale à un autre segment de seconde paroi latérale ou relie un segment de seconde paroi latérale adjacent à un autre segment de seconde paroi latérale adjacent, dans lequel chaque seconde paroi latérale comprend, de préférence, une paire desdits segments de seconde paroi latérale.

5. Conteneur selon la revendication 4, dans lequel les segments de seconde paroi latérale qui relient une paire de premières parois latérales adjacentes sont tous agencés sensiblement parallèlement à une première paroi latérale de la paire de premières parois latérales adjacentes, le conteneur comprenant, en outre, de préférence, un adhésif afin de fixer les segments de seconde paroi latérale sur ledit agencement sensiblement parallèle à ladite première paroi latérale.

6. Conteneur selon la revendication 5, comprenant, en outre, des moyens de verrouillage destinés à verrouiller les segments de seconde paroi latérale sur ledit agencement sensiblement parallèle par rapport à ladite première paroi latérale, dans lequel les moyens de verrouillage comprennent, de préférence, un premier élément de verrouillage qui est agencé sur ou dans ladite une première paroi latérale et un second élément de verrouillage qui est agencé sur ou dans l'autre première paroi latérale de la paire des premières parois latérales adjacentes, dans lequel les premier et second éléments de verrouillage sont configurés de manière à coopérer dans le but de verrouiller les segments de seconde paroi latérale sur ledit agencement sensiblement parallèle par rapport à ladite première paroi latérale,
dans lequel ladite une première paroi latérale (120) comprend, de préférence :
un segment de première paroi tertiaire (121) par lequel cette première paroi latérale est reliée à un bord (110A) correspondant de la paroi inférieure, ledit segment de première paroi tertiaire comportant un bord supérieur (121A) ;
un segment de première paroi quaternaire (122) relié au segment de première paroi tertiaire au niveau du bord supérieur du segment de première paroi tertiaire et s'étendant à partir de ce bord supérieur vers la paroi inférieure et comprenant un premier élément saillant (224) ou une première cavité formant le premier élément de verrouillage ;
dans lequel ladite autre première paroi latérale (130) comprend respectivement une première cavité (235) ou un premier élément saillant, formant ledit second élément de verrouillage,
dans lequel, de préférence :
le premier élément saillant s'étend au moins partiellement parallèlement à la paroi inférieure dans la première cavité ; et/ou
la première cavité est formée à une limite entre ladite autre première paroi latérale (130) et un segment de seconde paroi latérale (161) adjacent ; et/ou
dans la mesure où il dépend de la revendication 3, le segment de première paroi secondaire (132) comprend un deuxième élément saillant (132E) ou une deuxième cavité et dans lequel le segment de première paroi quaternaire (122) de ladite une première paroi latérale (120) comprend respectivement une deuxième cavité (123) ou un deuxième élément saillant, ces deuxième cavité et deuxième élément saillant étant configurés de manière à se coupler mutuellement afin de limiter une plage de mouvement du bord inférieur denté du segment de première paroi secondaire, dans lequel le troisième élément saillant ou la troisième cavité du segment de première paroi secondaire ou le deuxième élément saillant ou la deuxième cavité du segment de première paroi secondaire est, de préférence, formé au niveau d'une limite entre les première et deuxième parties de ce segment de première paroi secondaire.

7. Conteneur selon les revendications 6 et 3, dans lequel ladite une première paroi latérale (120) comprend :
un segment de première paroi tertiaire (121) par lequel cette première paroi latérale est reliée à un bord (110A) correspondant de la paroi inférieure, ledit segment de première paroi tertiaire comportant un bord supérieur (121A) ; et
un segment de première paroi quaternaire (122) relié au segment de première paroi tertiaire au niveau du bord supérieur du segment de première paroi tertiaire et s'étendant à partir de ce bord supérieur vers la paroi inférieure et comprenant une troisième cavité (123) ou un troisième élément saillant formant le premier élément de verrouillage,
dans lequel le segment de première paroi secondaire (132) comprend un troisième élément saillant (132E) ou une troisième cavité formant le second élément de verrouillage, ces troisième cavité et troisième élément saillant étant, en outre, configurés de manière à se coupler mutuellement afin de limiter une plage de mouvement du bord inférieur denté du segment de première paroi secondaire,
dans lequel les troisième élément saillant ou troisième cavité du segment de première paroi secondaire ou les deuxième élément saillant ou deuxième cavité du segment de première paroi secondaire sont, de préférence, formés au niveau d'une limite entre les première et deuxième parties de ce segment de première paroi secondaire.

8. Conteneur selon la revendication 6 ou 7, dans lequel le segment de première paroi quaternaire (122) comprend un élément de maintien de distance (124) qui :
s'étend vers le segment de première paroi tertiaire (121) et repose sur un segment de seconde paroi latérale (161) parmi la paire de segments de seconde paroi latérale afin de maintenir le segment de première paroi tertiaire et le segment de première paroi quaternaire séparés l'un de l'autre, et de maintenir lesdits segments de seconde paroi latérale qui relient une paire de premières parois latérales adjacentes toutes agencées sensiblement parallèlement à ladite une première paroi latérale de la paire de premières parois latérales adjacentes ; ou
s'étend vers le segment de première paroi secondaire (132) et repose sur un segment de seconde paroi latérale (161) parmi la paire de segments de seconde paroi latérale afin de maintenir lesdits segments de seconde paroi latérale qui relient une paire de premières parois latérales adjacentes toutes agencées sensiblement parallèlement à ladite une première paroi latérale de la paire de premières parois latérales adjacentes, et sur lequel le segment de première paroi quaternaire (122) repose contre un segment de seconde paroi latérale (161) parmi la paire de segments de seconde paroi latérale.

9. Conteneur selon l'une quelconque des revendications précédentes, comprenant, en outre, un substrat absorbant le liquide (3) agencé sur la paroi inférieure à l'intérieur de l'espace interne étanche au liquide, et/ou dans lequel chaque élément de couplage denté s'étend à partir de la paroi latérale respective à laquelle il est relié vers la paroi inférieure.

10. Conteneur selon l'une quelconque des revendications précédentes, dans lequel la paroi inférieure et les une ou plusieurs parois latérales sont réalisées en carton, dans lequel la paroi inférieure et les une ou plusieurs parois latérales sont, de préférence, réalisées en un morceau de carton unitaire.

11. Flanc de carton, comprenant :
un substrat de carton (100, 200, 300, 400) ; et
une pluralité de lignes de pliage, chaque ligne de pliage étant une ligne perforée (S) ou ligne plissée (C) formée sur le substrat de carton,
dans lequel la pluralité de lignes de pliage est configurée de manière à permettre le pliage du substrat de carton en le conteneur selon la revendication 10.

12. Couvercle de conteneur (502) comprenant un bord de couvercle (502A) comportant un ou plusieurs segments de bord de couvercle de conteneur (502A1, 502A2), une ouverture de couvercle (503) et au moins un élément de couplage denté (504) s'étendant à partir du bord de couvercle, dans lequel le couvercle de conteneur est configuré de manière à être fixé sur un bord supérieur (531A) d'une ou plusieurs parois latérales de corps de conteneur (531) d'un corps de conteneur (501) de telle sorte que les un ou plusieurs segments de bord de couvercle de conteneur et les une ou plusieurs parois latérales de corps de conteneur forment conjointement une ou plusieurs parois latérales du conteneur, ledit corps de conteneur comprenant, en outre, une paroi inférieure (510) à partir de laquelle les une ou plusieurs parois latérales de corps de conteneur s'étendent vers le haut, le corps de conteneur définissant un espace interne étanche au liquide dans lequel une poche en filet remplie de coquillages et/ou de crustacés peut être agencée,
dans lequel chaque élément de couplage denté est configuré, après que le couvercle de conteneur a été fixé sur le corps de conteneur, de manière à s'étendre à partir d'une paroi latérale respective du conteneur à laquelle il est relié, et est configuré de manière à se coupler à la poche en filet lors de l'agencement de la poche en filet à l'intérieur du corps de conteneur et de manière à maintenir ledit couplage lorsqu'un utilisateur saisit et déplace la poche en filet.

13. Ensemble de conteneur destiné à former un conteneur (500) afin de contenir une poche en filet (1) remplie de coquillages et/ou de crustacés (2) selon l'une quelconque des revendications 1 à 10, l'ensemble de conteneur comprenant :
un corps de conteneur (501) comprenant la paroi inférieure (510) et une ou plusieurs parois latérales de corps de conteneur (531) s'étendant vers le haut à partir de la paroi inférieure et définissant un espace interne étanche au liquide dans lequel la poche en filet peut être agencée ; et
un couvercle de conteneur (502) selon la revendication 12, dans lequel le bord de couvercle est, de préférence, configuré de manière à être scellé contre le bord supérieur des une ou plusieurs parois latérales de corps.

14. Conteneur (500) destiné à contenir une poche en filet (1) remplie de coquillages et/ou de crustacés (2) selon l'une quelconque des revendications 1 à 10,
dans lequel le conteneur comprend, en outre, un couvercle de conteneur (502) selon la revendication 12, fixé sur un bord supérieur (531A) des une ou plusieurs parois latérales.

15. Ensemble comprenant un conteneur selon l'une quelconque des revendications 1 à 10 ou la revendication 14, et :
une poche en filet (1) remplie de coquillages et/ou de crustacés (2), dans lequel la poche en filet est maintenue dans le conteneur ; ou
des algues comestibles (10) agencée à l'intérieur du conteneur et un couvercle (11) comprenant au moins une ouverture (12), ladite ouverture se couplant audit au moins un élément de couplage denté du conteneur retenant ainsi les algues comestibles dans le conteneur.
